# FASCICULE DE BREVET EUROPEEN

(11) **EP 2 630 357 B1**
(45) Date de publication et mention de la délivrance du brevet: **15.07.2015**
(21) Numéro de dépôt: 11784610.5
(22) Date de dépôt: 21.10.2011
(51) Int. Cl.: F02K 1/72, F02K 1/76

(54) **SYSTEME D'ACTIONNEMENT POUR UN ENSEMBLE DE PROPULSION D'UN AVION**
BETÄTIGUNGSSYSTEM FÜR EIN ANTRIEBSAGGREGAT EINES FLUGZEUGS
ACTUATION SYSTEM FOR A PROPULSIVE UNIT OF AN AIRPLANE

(30) Priorité: 21.10.2010 FR 1058628
(43) Date de publication de la demande: 28.08.2013
(73) Titulaire: Sagem Défense Sécurité, 92100 Boulogne-Billancourt (FR)
(72) Inventeur: RODRIGUES, Fernand, F-75015 Paris (FR)
(74) Mandataire: Regimbeau
(86) Numéro de dépôt international: PCT/EP2011/068461
(87) Numéro de publication internationale: WO 2012/052552

(56) Documents cités:
- WO-A1-03/100241
- FR-A1- 2 922 059
- FR-A1- 2 929 655
- US-A- 5 778 659
- US-A- 5 806 302

## Description

### DOMAINE TECHNIQUE

L'invention concerne un système d'actionnement de volets mobiles pour un ensemble de propulsion d'un avion, ainsi qu'un ensemble de propulsion incluant un tel système.

### ETAT DE LA TECHNIQUE

Un ensemble de propulsion d'avion comprend généralement une nacelle fixée à une aile de l'avion et un turboréacteur fixé à la nacelle. Dans le cas d'un turboréacteur à double flux, le turboréacteur inclut un compresseur, une chambre de combustion, une turbine haute pression permettant d'entrainer le compresseur et une turbine basse pression permettant d'entrainer en rotation une soufflante. La soufflante permet d'accélérer un flux d'air froid circulant dans un conduit annulaire défini entre le turboréacteur et la nacelle, pour générer la poussée nécessaire à la propulsion de l'avion.

Les ensembles de propulsion sont équipés de divers systèmes intégrés entre la peau externe de la nacelle et le turboréacteur.

Les ensembles de propulsion comprennent notamment un système d'inversion de poussé ou système TRAS (« Thrust Reverse Actuation System ») permettant d'inverser la poussée dans les phases d'atterrissage afin d'améliorer la capacité de freinage de l'avion. Un tel système comprend un ensemble de volets mobiles actionnés par des vérins associés permettant d'obstruer le conduit annulaire et de dévier le flux d'air froid vers l'avant de la nacelle, générant de ce fait une contre-poussée qui vient s'ajouter au freinage des roues.

Dans le cas d'un système d'inversion de poussée dit « à portes », la nacelle est équipée de volets mobiles (appelés « portes ») qui pivotent par rapport à la structure de la nacelle entre une position rétractée dans laquelle ils autorisent une circulation du flux d'air dans le conduit vers l'arrière de la nacelle et une position déployée dans laquelle les volets bloquent le flux d'air et le réorientent vers l'avant de la nacelle.

Dans le cas d'un système d'inversion de poussée dit « à grilles », la nacelle est équipée de volets mobiles qui coulissent le long de rails entre une position rétractée dans laquelle ils autorisent une circulation du flux d'air dans le conduit vers l'arrière de la nacelle et une position déployée dans laquelle ils découvrent des grilles d'aubes de déviation disposées dans l'épaisseur de la nacelle.

De manière générale, dans l'un ou l'autre des cas, les volets mobiles sont actionnés par un ensemble de vérins dédiés.

Par ailleurs, afin d'optimiser la consommation de carburant, le système de propulsion peut comprendre un système de régulation du flux d'air ou système VFN (« Variable Fan Nozzle »). Un tel système permet de réguler le flux d'air froid circulant dans le conduit annulaire en fonction de la vitesse de l'avion. Un tel système comprend généralement des volets mobiles actionnés par des vérins pour faire varier la section du conduit de circulation.

Afin de réaliser des économies de carburant supplémentaires, les constructeurs aéronautiques cherchent à diminuer au maximum la trainée aérodynamique générée par les ensembles de propulsion. Cela passe notamment par une diminution de l'épaisseur de la nacelle. Cela a pour conséquence de laisser peu de place aux divers systèmes intégrés entre la peau externe de la nacelle et le turboréacteur.

Le document FR 2 922 059 décrit un actionneur linéaire double-action permettant de déplacer de manière indépendante une partie interne et une partie externe de capot par rapport à la nacelle. L'actionneur comprend une base prévue pour être rattachée à la nacelle, une première tige mobile en translation par rapport à la base et destinée à être rattachée à la partie interne de capot, et une deuxième tige également mobile en translation par rapport à la base et destinée à être rattachée à la partie externe de capot.

L'actionneur proposé dans ce document permet le déplacement de l'une ou l'autre des parties de capot par un unique moteur, de manière à permettre un pilotage sélectif du système d'inversion de poussée ou du système de régulation du flux d'air.

Dans l'actionneur proposé dans ce document la première tige et la deuxième tige sont formées par des tubes aptes à coulisser l'un dans l'autre de manière télescopique. Cela a pour effet de générer des contraintes dans le dispositif lorsqu'au cours d'un déplacement de l'une ou l'autre des parties de capot, les trois points de fixation du dispositif (point de rattachement de la base à la nacelle, point de fixation de la première tige à la partie interne de capot et point de fixation de la deuxième tige à la partie externe de capot) peuvent ne plus être alignés.

### RESUME DE L'INVENTION

Un but de l'invention est de proposer un système d'actionnement de volets mobiles pour un ensemble de propulsion présentant un encombrement réduit, et permettant de limiter les contraintes générées dans le système.

Ce problème est résolu dans le cadre de la présente invention grâce à un système d'actionnement pour un ensemble de propulsion incluant une nacelle, un turboréacteur et un conduit de circulation d'air défini entre la nacelle et le turboréacteur, le système d'actionnement comprenant :
- un corps et un dispositif de liaison pour fixer le corps à la nacelle, le dispositif de liaison autorisant un mouvement du corps par rapport à la nacelle selon deux axes de rotation,
- un premier organe de déplacement d'un volet de régulation d'un flux d'air circulant dans le conduit, le premier organe s'étendant à partir du corps et présentant un premier point de fixation du premier organe au volet,
- un deuxième organe de déplacement d'un volet d'inversion de poussée, le deuxième organe s'étendant à partir du corps et présentant un deuxième point de fixation du deuxième organe au volet, le corps étant disposé entre le premier point et le deuxième point de fixation, et
- un dispositif de transmission ayant une entrée, une première sortie reliée au premier organe et une deuxième sortie reliée au deuxième organe, le dispositif de transmission étant apte à transmettre un mouvement d'entrée sélectivement vers la première sortie pour déplacer le volet de régulation du flux ou vers la deuxième sortie pour déplacer le volet d'inversion de poussée.

Grâce à un tel système d'actionnement, le volet de régulation du flux et le volet d'inversion de poussée sont commandés par un système d'actionnement unique, ce qui permet de réduire l'encombrement des équipements intégrés dans l'ensemble de propulsion.

Comme les points de fixation sont positionnés de part et d'autre du corps et que le corps peut se déplacer par rapport à la nacelle selon deux degrés de liberté, le corps se positionne de lui-même de manière à obtenir un alignement des trois points de fixation du système. Cela permet de limiter les contraintes s'exerçant entre le corps et les organes de déplacement.

En outre, le système d'actionnement proposé peut présenter les caractéristiques suivantes :
- le dispositif de liaison comprend un double cardan,
- le premier organe de déplacement et le deuxième organe de déplacement sont mobiles en translation par rapport au corps selon des directions de translation parallèles,
- le premier organe de déplacement (est mobile en translation par rapport au corps entre une position rétractée et une position déployée, selon un premier sens de déploiement, et le deuxième organe de déplacement est mobile en translation par rapport au corps entre une position rétractée et une position déployée, selon un deuxième sens de déploiement opposé au premier sens de déploiement,
- le dispositif comprend un câble d'alimentation s'étendant entre la nacelle et le corps pour l'alimentation du système d'actionnement, le câble étant plié pour former deux brins de câble, les brins étant aptes à se translater l'un par rapport à l'autre pour absorber un mouvement du corps par rapport à la nacelle,
- le dispositif comprend un moteur relié à l'entrée du dispositif de transmission pour générer le mouvement d'entrée,
- le dispositif de transmission comprend un train épicycloïdal, incluant un planétaire relié à l'entrée, ainsi qu'un porte-satellite et une couronne reliés à la première et à la deuxième sorties,
- le dispositif de transmission comprend un moyen de blocage pour immobiliser la première sortie lorsqu'un mouvement du volet d'inversion de poussée est autorisé,
- en particulier, le moyen de blocage inclut un frein électromagnétique,
- le dispositif de transmission comprend un moyen de blocage pour immobiliser la deuxième sortie lorsqu'un mouvement du volet de régulation du flux est autorisé,
- en particulier, le moyen de blocage inclut un doigt de verrouillage mobile entre une position rétractée dans laquelle le volet d'inversion de poussée est libre en mouvement et une position déployée dans laquelle le doigt empêche le mouvement du volet d'inversion de poussée,
- le système comprend des moyens de synchronisation pour synchroniser la première sortie avec une première sortie d'un autre système d'actionnement pour l'ensemble de propulsion,
- les moyens de synchronisation comprennent une tige flexible reliant la première sortie à une première sortie de l'autre système d'actionnement.

L'invention se rapporte également à un ensemble de propulsion incluant :
- une nacelle,
- un turboréacteur,
- un conduit de circulation d'air défini entre la nacelle et le turboréacteur,
- un volet de régulation du flux d'air circulant dans le conduit,
- un volet d'inversion de poussée, et
- un système d'actionnement tel que défini précédemment pour déplacer sélectivement le volet de régulation du flux ou le volet d'inversion de poussée par rapport à la nacelle.

### BREVE DESCRIPTION DES DESSINS

D'autres caractéristiques et avantages ressortiront encore de la description qui suit, laquelle est purement illustrative et non limitative et doit être lue en regard des figures annexées parmi lesquelles :

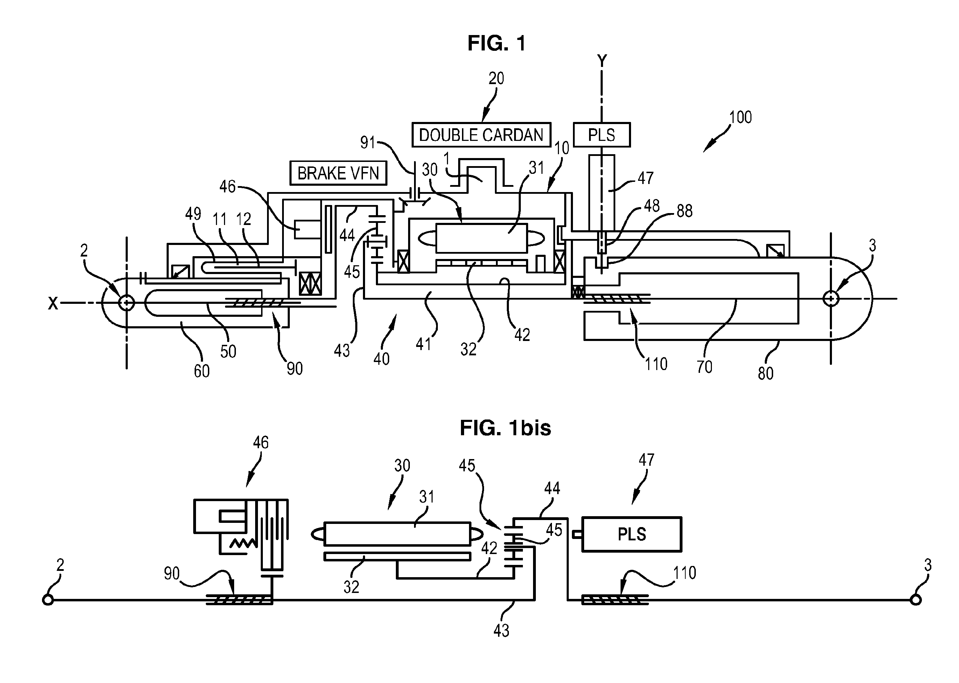

- la figure 1 représente de manière schématique, en coupe un système d'actionnement conforme à un mode de réalisation de l'invention,
- la figure 1 bis représente de manière schématique une variante du système d'actionnement de la figure 1,
- la figure 2 représente de manière schématique un dispositif de liaison pour fixer le corps du système d'actionnement à la nacelle, et
- la figure 3 représente de manière schématique un ensemble de propulsion comprenant une pluralité de systèmes d'actionnement,
- la figure 4 illustre de manière schématique un possible désalignement entre trois points de fixation du système d'actionnement.

### DESCRIPTION D'UN MODE DE REALISATION

Sur la figure 1, le système d'actionnement 100 représenté comprend un corps 10 et un dispositif de liaison 20 pour fixer le corps 10 à la nacelle de l'ensemble de propulsion.

Le système comprend également un moteur électrique 30 et un dispositif de transmission 40, agencés à l'intérieur du corps 10.

Le système comprend en outre une première tige mobile 50 par rapport au corps 10 permettant de déplacer un volet 60 de régulation de flux, et une deuxième tige mobile 70 par rapport au corps 10 permettant de déplacer un volet 80 d'inversion de poussée.

La première tige 50 est mobile en translation par rapport au corps 10 entre une position rétractée et une position déployée le long d'une direction de déplacement représentée par un axe X.

La deuxième tige 70 est également mobile en translation par rapport au corps 10 entre une position rétractée et une position déployée le long d'une direction de déplacement parallèle à la direction de déplacement de la première tige 50.

Plus précisément, la première tige 50 est mobile entre une position rétractée et une position déployée, selon un premier sens de déploiement, et la deuxième tige 70 est mobile entre une position rétractée et une position déployée, selon un deuxième sens de déploiement opposé au premier sens de déploiement.

Ainsi, le corps 10 est positionné entre les deux tiges 50 et 70, et les deux tiges font saillie à partir du corps 10 dans des directions opposées.

Le dispositif de liaison 20 est un dispositif à double cardan autorisant un mouvement du corps 10 par rapport à la nacelle selon deux axes de rotation perpendiculaires entre eux.

Le dispositif de transmission 40 est un dispositif mécanique à une entrée et deux sorties, permettant de transmettre un mouvement qu'il reçoit en entrée du moteur électrique 30 sélectivement vers une première sortie pour commander le mouvement de la première tige mobile 50 ou vers une deuxième sortie pour commander le mouvement de la deuxième tige mobile 70.

Plus précisément, le dispositif de transmission 40 inclut un train épicycloïdal 41 composé d'un planétaire 42 relié à l'entrée moteur, un porte-satellite 43 relié à la deuxième sortie, une couronne 44 reliée à la première sortie et des stellites 45 agencés entre le planétaire 42 et la couronne 44 et supportés par des bras du porte-satellite 43.

Le moteur électrique 30 comprend un stator 31 fixe par rapport au corps 10 et un rotor 32 creux apte à être entrainé en rotation autour d'un axe X lorsque le moteur est alimenté. Le rotor 32 est solidaire du planétaire 42 qui constitue la pièce d'entrée du système de transmission. Le moteur est ainsi apte à entrainer en rotation le planétaire 42 par rapport au corps 10 autour de l'axe X.

La première tige mobile 50 est reliée à la couronne 44 par l'intermédiaire un dispositif 90 de liaison vis-écrou permettant de convertir un déplacement en rotation de la couronne 44 autour de l'axe X en un déplacement en translation de la première tige 50 parallèlement à l'axe X. La couronne 44 constitue ainsi la première pièce de sortie du dispositif de transmission 40.

De même, la deuxième tige mobile 60 est reliée au porte-satellite 45 par l'intermédiaire d'un dispositif 110 de liaison vis-écrou permettant de convertir un déplacement en rotation du porte-satellite 43 autour de l'axe X en un déplacement en translation de la deuxième tige 70 parallèlement à l'axe X. Le porte-satellite 43 constitue ainsi la deuxième pièce de sortie du dispositif de transmission 40.

Le dispositif 40 de transmission inclut également un frein électromagnétique 46 apte à être actionné pour immobiliser la couronne 44 par rapport au corps 10.

Le dispositif 40 de transmission inclut également un moyen 47 de verrouillage apte à être actionné pour sélectivement bloquer ou libérer le volet 80 d'inversion de poussée. A cet effet, le moyen 47 de verrouillage comprend un doigt mobile 48 en translation dans une direction Y perpendiculaire à la direction X de déplacement du volet 80 d'inversion de poussée. Le doigt 48 est apte à être déplacé entre une position rétractée dans laquelle il libère le volet 80 d'inversion de poussée et une position déployée dans la quelle il est reçu dans un logement 88 correspondant du volet 80 d'inversion de poussée pour empêcher tout déplacement de celui-ci.

Le dispositif 40 de transmission inclut également un câble d'alimentation 49 pour relier le moteur 30 à une source d'énergie électrique. Le corps 10 comprend un canal interne 11 dans lequel s'étend le câble d'alimentation 49. Le canal interne 11 présente une forme « en épingle » avec deux portions 13 et 14 parallèles. Le corps 10 comprend une paroi de séparation 12 séparant les deux portions parallèles 13 et 14 du canal interne. Ainsi, le câble d'alimentation 49 est plié pour suivre le canal 11 et forme deux brins de câble agencés de par et d'autre de la paroi 11 de séparation. En cas de mouvement du corps 10 par rapport à la nacelle, la paroi de séparation 12 se déplace par rapport à la nacelle et les brins du câble 49 se translatent l'un par rapport à l'autre sans endommager le câble.

Par ailleurs, le dispositif de transmission 40 comprend également une sortie mécanique 91 reliée à la couronne 44 permettant de synchroniser le déplacement du volet 60 de régulation du flux avec le déplacement des autres volets de régulation du flux de l'ensemble de propulsion. Le système 100 comprend une tige de transmission flexible permettant de lier l'ensemble des sorties mécaniques 91 des systèmes d'actionnement 100 de l'ensemble de propulsion.

Pour une vitesse donnée d'entrainement du moteur 30, le système d'actionnement 100 représenté sur la figure 1 permet de fournir une vitesse rapide de déplacement du volet 60 de régulation du flux d'air et une vitesse lente de déplacement du volet 80 d'inversion de poussée.

La figure 1 bis représente de manière schématique une variante du système d'actionnement 100 de la figure 1.

Dans cette variante, le planétaire 42 est toujours relié à l'entrée moteur. Cependant, le porte-satellite 43 est relié à la première sortie (tige mobile 50) et la couronne 44 est reliée à la deuxième sortie (tige mobile 70).

Pour une vitesse donnée d'entrainement du moteur, le système d'actionnement fournie ainsi une vitesse lente de déplacement du volet 60 de régulation du flux d'air et une vitesse rapide de déplacement du volet 80 d'inversion de poussée.

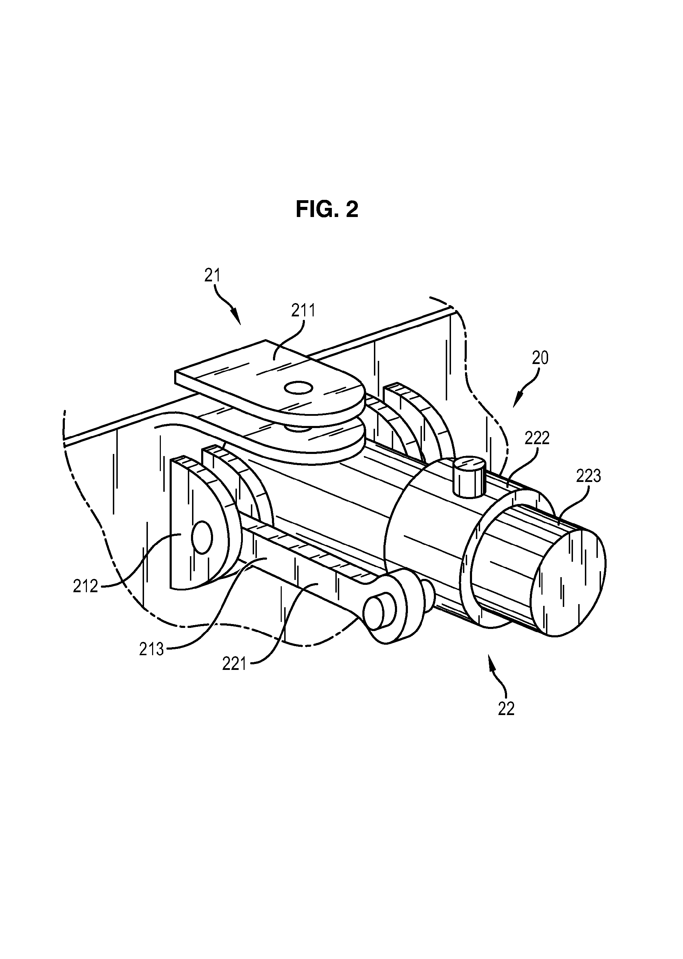

La figure 2 représente de manière schématique un dispositif de liaison 20 pour fixer le corps du système d'actionnement à la nacelle.

Le dispositif de liaison 20 est un dispositif à double cardan comprenant un premier dispositif de cardan 21 et un deuxième dispositif de cardan 22.

Le premier dispositif de cardan 21 comprend une première fourche 211 solidaire de la nacelle, une pièce intermédiaire 212 et une deuxième fourche 213. La pièce intermédiaire 212 est montée rotative d'une part par rapport à la première fourche 211 autour d'un premier axe et d'autre part par rapport à la deuxième fourche 213 autour d'un deuxième axe de rotation perpendiculaire au premier axe.

De même, le deuxième dispositif de cardan 22 comprend une première fourche 221 solidaire de la deuxième fourche 213 du premier dispositif de cardan 21, une pièce intermédiaire 222 et une deuxième fourche 223 solidaire du corps 10 du dispositif d'actionnement. La pièce intermédiaire 222 est montée rotative d'une part par rapport à la première fourche 221 autour d'un premier axe et d'autre part par rapport à la deuxième fourche 223 autour d'un deuxième axe de rotation perpendiculaire au premier axe.

Un tel dispositif de liaison 20 autorise un déplacement du corps 10 du dispositif d'actionnement par rapport à la nacelle pour tenir compte d'un possible désalignement des trois points de fixation du dispositif d'actionnement, notamment lorsque le volet de régulation du flux d'air 60 et le volet d'inversion de poussée se trouvent simultanément en position déployée.

Le point 1 est le point de fixation du corps 10 à la nacelle. Le point 2 est le point de fixation de la première tige 50 au volet de régulation du flux d'air 60. Le point 3 est le point de fixation de la deuxième tige 70 au volet d'inversion de poussée 80.

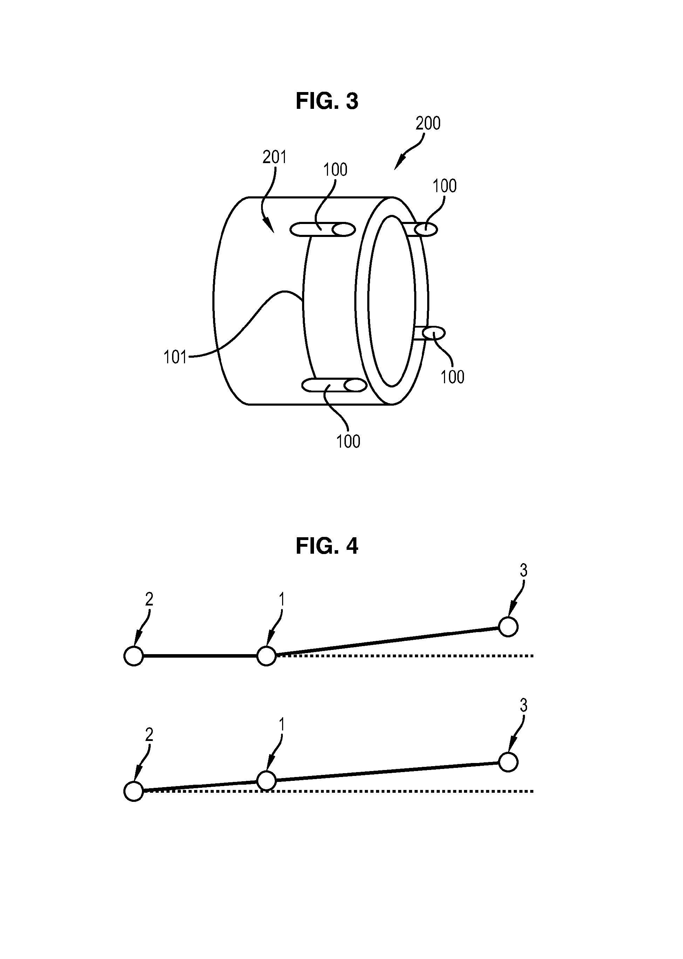

Comme cela est illustré sur la figure 4, la fixation du corps 10 du système d'actionnement à la nacelle par l'intermédiaire du dispositif de liaison à double cardan 20 autorise un désalignement des trois points de fixation du système respectivement au volet de régulation du flux d'air (point 2), à la nacelle (point 1) et au volet d'inversion de poussée (point 3). En particulier, les trois points ne se trouvent plus nécessairement dans le même plan.

La figure 3 représente de manière schématique un ensemble de propulsion 200 comprenant une nacelle 201 et une pluralité de systèmes d'actionnement 100. En cas de panne de la synchronisation électrique, une synchronisation mécanique des systèmes d'actionnement 100 est réalisée par l'intermédiaire de tiges flexibles 101 reliant l'ensemble des sorties mécaniques des systèmes d'actionnement 100.

Le dispositif 40 d'actionnement peut être commandé suivant deux modes de fonctionnement.

### Mode de fonctionnement « régulation du flux d'air »

Ce mode de fonctionnement n'est activable qu'en vol.

Dans ce mode de fonctionnement, la deuxième sortie (porte-satellite 43) du dispositif de transmission 40 est bloquée par l'intermédiaire du moyen de verrouillage 47. Le doigt mobile 48 est en position déployé et est reçu dans le logement 88 du volet d'inversion de poussée pour empêcher tout déplacement de celui-ci.

Le frein électromagnétique 46 est activé pour libérer la première sortie (couronne 44) du dispositif de transmission 40.

Lorsque le moteur électrique 30 est commandé en rotation, le mouvement de rotation en entrée planétaire 42) du dispositif de transmission 40 est transmis à la première sortie (couronne 44) du dispositif de transmission. Le mouvement de rotation de la couronne 44 est converti en un mouvement de translation de la première tige 50 par l'intermédiaire du dispositif de liaison vis-écrou 90.

Ainsi, la première tige 50 se déplace par rapport au corps 10 du système d'actionnement 40, et provoque un déplacement correspondant du volet 60 de régulation du flux.

La commande « régulation du flux d'air » permet de déplacer la première tige 50 entre une position rétractée dans laquelle la distance entre les points 1 et 2 est minimale et une position déployée dans laquelle la distance entre les points 1 et 2 est maximale, la distance entre les points 1 et 3 étant constante.

### Mode de fonctionnement « inversion de poussée »

Lorsque les conditions sont remplies pour permettre à la commande « inversion de poussée » d'être activée, la première tige 50 est immobilisée en position déployée par l'intermédiaire du frein électromagnétique 46.

Le moyen de verrouillage 47 est commandé pour débloquer la deuxième sortie (porte-satellite 43) du dispositif de transmission 40. Plus précisément, le doigt 48 de verrouillage est rétracté pour libérer le volet 80 d'inversion de poussée et autoriser son déplacement.

Lorsque le moteur électrique 30 est commandé en rotation, le mouvement de rotation en entrée (planétaire 42) du dispositif de transmission 40 est transmis à la deuxième sortie (porte-satellite 43) du dispositif de transmission 40. Le mouvement de rotation du porte-satellite 43 est converti en un mouvement de translation de la deuxième tige 70 par l'intermédiaire du dispositif de liaison vis-écrou 110.

Ainsi, la deuxième tige 70 se déplace par rapport au corps 10 du système d'actionnement, et provoque le déplacement correspondant du volet 80 d'inversion de poussée.

La commande « inversion de poussée » permet de faire varier la distance entre les points 1 et 3, la distance entre les points 1 et 2 étant constante.

## Revendications

1. Système d'actionnement (100) pour un ensemble de propulsion incluant une nacelle, un turboréacteur et un conduit de circulation d'air défini entre la nacelle et le turboréacteur, le système d'actionnement (100) comprenant :
- un corps (10) et un dispositif de liaison (20) pour fixer le corps (10) à la nacelle,
- un premier organe de déplacement (50) d'un volet (60) de régulation d'un flux d'air circulant dans le conduit, le premier organe (50) s'étendant à partir du corps (10) et présentant un premier point (2) de fixation du premier organe au volet (60),
- un deuxième organe de déplacement (70) d'un volet d'inversion (80) de poussée, le deuxième organe (70) s'étendant à partir du corps (10)
et présentant un deuxième point (3) de fixation du deuxième organe au volet (80), et
- un dispositif de transmission (40) ayant une entrée (42), une première sortie (44) reliée au premier organe (50) et une deuxième sortie (43) reliée au deuxième organe (70), le dispositif de transmission (40) étant apte à transmettre un mouvement d'entrée sélectivement vers la première sortie pour déplacer le volet de régulation du flux ou vers la deuxième sortie pour déplacer le volet d'inversion de poussée,
**caractérisé en ce que** le corps (10) est disposé entre le premier point (2) et le deuxième point (3) de fixation et le dispositif de liaison (20) autorise un mouvement du corps par rapport à la nacelle selon deux axes de rotation.

2. Système selon la revendication 1, dans lequel le dispositif de liaison (20) comprend un double cardan.

3. Système selon l'une des revendications 1 ou 2, dans lequel le premier organe de déplacement (50) et le deuxième organe de déplacement (70) sont mobiles en translation par rapport au corps (10) selon des directions de translation parallèles.

4. Système selon l'une des revendications 1 à 3, dans lequel :
- le premier organe de déplacement (50) est mobile en translation par rapport au corps (10) entre une position rétractée et une position déployée, selon un premier sens de déploiement, et
- le deuxième organe de déplacement (70) est mobile en translation par rapport au corps (10) entre une position rétractée et une position déployée, selon un deuxième sens de déploiement opposé au premier sens de déploiement.

5. Système selon l'une des revendications 1 à 4, comprenant un câble d'alimentation (49) s'étendant entre la nacelle et le corps (10) pour l'alimentation du système d'actionnement (100), le câble (49) étant plié pour former deux brins de câble, les brins étant apte à se translater l'un par rapport à l'autre pour absorber un mouvement du corps (10) par rapport à la nacelle.

6. Système selon l'une des revendications 1 à 5, comprenant un moteur (30) relié à l'entrée (42) du dispositif de transmission (40) pour générer le mouvement d'entrée.

7. Système selon l'une des revendications qui précèdent, dans lequel le dispositif de transmission (40) comprend un train épicycloïdal (41), incluant un planétaire (42) en entrée, ainsi qu'une couronne (44) et un porte-satellite (43) en première et deuxième sorties.

8. Système selon l'une des revendications qui précèdent, dans lequel le dispositif de transmission (40) comprend un moyen de blocage (46) pour immobiliser la première sortie (44) lorsqu'un mouvement du volet (80) d'inversion de poussée est autorisé.

9. Système selon la revendication 8, dans lequel le moyen de blocage (46) inclut un frein électromagnétique.

10. Système selon l'une des revendications qui précèdent, dans lequel le dispositif de transmission (40) comprend un moyen de blocage (47) pour immobiliser la deuxième sortie (43) lorsqu'un mouvement du volet (60)de régulation du flux est autorisé.

11. Système selon la revendication 10, dans lequel le moyen de blocage (47) inclut un doigt (48) de verrouillage mobile entre une position rétractée dans laquelle le volet (80) d'inversion de poussée est libre en mouvement et une position déployée dans laquelle le doigt (48) empêche le mouvement du volet (80) d'inversion de poussée.

12. Système selon l'une des revendications qui précèdent, comprenant des moyens (91, 101) de synchronisation pour synchroniser la première sortie (44) avec une première sortie d'un autre système d'actionnement de l'ensemble de propulsion.

13. Système selon la revendication 12, dans lequel les moyens de synchronisation (91, 101) comprennent une tige flexible (101) reliant la première sortie (43) à une première sortie de l'autre système d'actionnement.

14. Ensemble (200) de propulsion incluant :
- une nacelle (201),
- un turboréacteur,
- un conduit de circulation d'air défini entre la nacelle et le turboréacteur,
- un volet (60) de régulation du flux d'air circulant dans le conduit,
- un volet (80) d'inversion de poussée, et
- un système d'actionnement (100) conforme à l'une des revendications 1 à 12 pour déplacer sélectivement le volet (60) de régulation du flux ou le volet (80) d'inversion de poussée par rapport à la nacelle (201).

## Patentansprüche

1. Betätigungssystem (100) für eine Antriebseinheit, darin eingeschlossen eine Gondel, ein Turbinenstrahltriebwerk und ein Luftströmungsrohr, das zwischen der Gondel und dem Turbinenstrahltriebwerk definiert ist, wobei das Betätigungssystem (100) Folgendes umfasst:
- einen Körper (10) und eine Verbindungsvorrichtung (20), um den Körper (10) an die Gondel zu befestigen,
- ein erstes Organ zur Verschiebung (50) einer Klappe (60) zur Regulierung eines Luftflusses, der im Rohr zirkuliert, wobei sich das erste Organ (50) vom Körper (10) erstreckt und einen ersten Punkt (2) zur Befestigung des ersten Organs an die Klappe (60) aufweist,
- ein zweites Organ zur Verschiebung (70) einer Klappe zur Schubumkehr (80), wobei sich das zweite Organ (70) vom Körper (10) erstreckt und einen zweiten Punkt (3) zur Befestigung des zweiten Organs an die Klappe (80) aufweist, und
- eine Übertragungsvorrichtung (40) mit einem Eingang (42), einem ersten Ausgang (44), der mit dem ersten Organ (50) verbunden ist, und einem zweiten Ausgang (43), der mit dem zweiten Organ (70) verbunden ist, wobei die Übertragungsvorrichtung (40) ausgelegt ist, um eine Eingangsbewegung selektiv hin zum ersten Ausgang zu übertragen, um die Klappe zur Regulierung des Flusses zu verschieben, oder hin zum zweiten Ausgang, um die Klappe zur Schubumkehr zu verschieben,
**dadurch gekennzeichnet, dass** der Körper (10) zwischen dem ersten Punkt (2) und dem zweiten Punkt (3) zur Befestigung angeordnet ist und die Verbindungsvorrichtung (20), eine Bewegung des Körpers mit Bezug auf die Gondel gemäß zwei Drehachsen ermöglicht.

2. System nach Anspruch 1, wobei die Verbindungsvorrichtung (20) ein doppeltes Kardangelenk umfasst.

3. System nach einem der Ansprüche 1 bis 2, wobei das erste Organ zur Verschiebung (50) und das zweite Organ zur Verschiebung (70) in Translation mit Bezug auf den Körper (10) gemäß parallelen Translationsrichtungen beweglich sind.

4. System nach einem der Ansprüche 1 bis 3, wobei
- das erste Organ zur Verschiebung (50) in Translation mit Bezug auf den Körper (10) zwischen einer zurückgezogenen Position und einer auseinander gezogenen Position gemäß einer ersten Entfaltungsrichtung beweglich ist, und
- das zweite Organ zur Verschiebung (70) in Translation mit Bezug auf den Körper (10) wischen einer zurückgezogenen Position und einer auseinander gezogenen Position gemäß einer zweiten Entfaltungsrichtung, die der ersten Entfaltungsrichtung entgegengesetzt ist, beweglich ist.

5. System nach einem der Ansprüche 1 bis 4, umfassend ein Versorgungskabel (49), das sich zwischen der Gondel und dem Körper (10) erstreckt, um das Betätigungssystem (100) zu versorgen, wobei das Kabel (49) geknickt ist, um zwei Kabeladern zu bilden, wobei die Adern ausgelegt sind, um sich gegenseitig zu verschieben, um eine Bewegung des Körpers (10) mit Bezug auf die Gondel zu absorbieren.

6. System nach einem der Ansprüche 1 bis 5, umfassend einen Motor (30), der mit dem Eingang (42) der Übertragungsvorrichtung (40) verbunden ist, um die Eingangsbewegung zu erzeugen.

7. System nach einem der vorhergehenden Ansprüche, wobei die Übertragungsvorrichtung (40) ein Umlaufgetriebe (41) umfasst, darin eingeschlossen ein Planetengetriebe (42) am Eingang, ebenso wie ein Ringrad (44) und einen Planetenträger (43) am ersten und am zweiten Ausgang.

8. System nach einem der vorhergehenden Ansprüche, wobei eine Übertragungsvorrichtung (40) ein Blockierungsmittel (46) umfasst, um den ersten Ausgang (44) zu immobilisieren, wenn eine Bewegung der Klappe (80) zur Schubumkehr ermöglicht wird.

9. System nach Anspruch 8, wobei das Blockierungsmittel (46) eine elektromagnetische Bremse umfasst.

10. System nach einem der vorhergehenden Ansprüche, wobei die Übertragungsvorrichtung (40) ein Blockierungsmittel (47) umfasst, um den zweiten Ausgang (43) zu immobilisieren, wenn eine Bewegung der Klappe (60) zur Regulierung des Flusses ermöglicht wird.

11. System nach Anspruch 10, wobei das Blockierungsmittel (47) einen Verriegelungsbolzen (48) umfasst, der zwischen einer zurückgezogenen Position, in der die Klappe (80) zur Schubumkehr frei in ihrer Bewegung ist, und einer auseinander gezogenen Position beweglich ist, in der der Bolzen (48) die Bewegung des Klappe (80) zur Schubumkehr verhindert.

12. System nach einem der vorhergehenden Ansprüche, umfassend Synchronisierungsmittel (91, 101), um den ersten Ausgang (44) mit einem ersten Ausgang eines anderen Betätigungssystems der Antriebseinheit zu synchronisieren.

13. System nach Anspruch 12, wobei die Synchronisierungsmittel (91, 101) einen flexiblen Schaft (101) umfassen, der den ersten Ausgang (43) mit einem ersten Ausgang des anderen Betätigungssystems verbindet.

14. Antriebseinheit (200), umfassend:
- eine Gondel (201),
- ein Turbinenstrahltriebwerk,
- ein Luftströmungsrohr, das zwischen der Gondel und dem Turbinenstrahltriebwerk definiert ist,
- einer Klappe (60) zur Regulierung des Luftflusses, der im Rohr zirkuliert,
- einer Klappe (80) zur Schubumkehr, und
- ein Betätigungssystem (100) nach einem der Ansprüche 1 bis 12, um selektiv die Klappe (60) zur Regulierung des Flusses oder die Klappe (80) zur Schubumkehr mit Bezug auf die Gondel (201) zu verschieben.

## Claims

1. Actuation system (100) for a propulsion unit including a nacelle, a turbojet engine and an air circulation conduit defined between the nacelle and the turbojet engine, the actuation system (100) comprising:
- a body (10) and a connection device (20) for fixing the body (10) to the nacelle,
- a first member (50) for moving a flap (60) regulating an air flow circulating in the conduit, the first member (50) extending from the body (10) and having a first point (2) for fixing the first member to the flap (60),
- a second member (70) for moving a thrust reversal flap (80), the second member (70) extending from the body (10) and having a second point (3) for fixing the second member to the flap (80), and
- a transmission device (40) having an input (42), a first output (44) connected to the first member (50) and a second output (43) connected to the second member (70), the transmission device (40) being able to transmit an input movement selectively to the first output to move the flow regulation flap or to the second output for moving the thrust reversal flap, **characterised in that** the body (10) is arranged between the first fixing point (2) and the second fixing point (3) and the connection device (20) allows for a movement of the body with respect to the nacelle according two rotation axes.

2. System according to claim 1, in which the connection device (20) comprises a double cardan.

3. System according to one of claims 1 or 2, in which the first member (50) and the second member (70) are able to move in translation with respect to the body (10) in parallel translation directions.

4. System according to one of claims 1 to 3, in which:
- the first member (50) is movable in translation with respect to the body (10) between a retracted position and a deployed position, in a first deployment direction, and
- the second member (70) is able to move in translation with respect to the body (10) between a retracted position and a deployed position, in a second deployment direction opposite to the first deployment direction.

5. System according to one of claims 1 to 4, comprising a supply cable (49) extending between the nacelle and the body (10) in order to supply the actuation system (100), the cable (49) being folded to form two cable lengths, the lengths being able to translate with respect to each other in order to absorb a movement of the body (10) with respect to the nacelle.

6. System according to one of claims 1 to 5, comprising a motor (30) connected to the input (42) of the transmission device (40) in order to generate an input movement.

7. System according to any one of the preceding claims, in which the transmission device (40) comprises an epicyclic gear train (41), including a sun wheel (42) as an input, and a ring (44) and a planet holder (43) as first and second outputs.

8. System according to any one of the preceding claims, in which the transmission device (40) comprises a locking means (46) for immobilising the first output (44) when a movement of the thrust reversal flap (80) is enabled.

9. System according to claim 8, in which the locking means (46) includes an electromagnetic brake.

10. Actuation means according to any one of the preceding claims, in which the transmission device (40) comprises a locking means (47) for immobilising the second output (43) when a movement of the flow regulation flap (60) is enabled.

11. Actuation means according to claim 10, in which the locking means (47) includes a locking finger (48) able to move between a retracted position in which the thrust reversal flap (80) is free to move and a deployed position in which the finger (48) prevents the movement of the thrust reversal flap (80).

12. Actuation system according to one of the preceding claims, comprising synchronisation means (91, 101) for synchronising the first output (44) with a first output of another actuation system for the propulsion unit.

13. Actuation system according to claim 12, in which the synchronisation means (91, 101) comprise a flexible rod (101) connecting the first output (43) to a second output of the other actuation system.

14. Propulsion unit (200) including:
- a nacelle (201),
- a turbojet engine,
- an air circulation conduit defined between the nacelle and the turbojet engine,
- a flap (60) for regulating the air flow circulating the conduit,
- a thrust reversal flap (80), and
- an actuation system (100) in accordance with one of claims 1 to 12 for selectively moving the flow regulation flap (60) or the thrust reversal flap (80) with respect to the nacelle (201).
